# EUROPEAN PATENT APPLICATION

(11) **EP 2 174 740 A1**
(43) Date of publication of application: **14.04.2010**
(21) Application number: 08017669.6
(22) Date of filing: 08.10.2008
(51) Int. Cl.: B23H 9/10, F01D 11/12

(54) **Honeycomb seal and method to produce it**

(71) Applicant: Siemens Aktiengesellschaft, 80333 München (DE)
(72) Inventor: Fairbourn, David, Sandy, UT 84070 (US); Walker, Paul Mathew, Dunholme Lincoln LN2 3NE (GB)

(57) **Abstract**

Honeycomb cell often show a poor mechanical bonding to the substrate, because they are brazed on the substrate.

The honeycomb cell (13) of the invention is in one part with the substrate (4') so that there is no brazing is needed.

## Description

The invention relates to a honeycomb seal and a method to produce it.

Honeycomb seals are utilized to minimize the leakage in gas pressures inside an engine particularly between stator and rotor of turbines.

The current method of manufacture consists of casting a material with a defined recess. These pieces are called backing plates (substrate).

Honeycomb materials are fabricated from very thin, light sheet metal pieces, welded and shaped to resemble the honeycomb of a honeybee. These structures are skived, a method of thin cutting, into thin sheets having the same depth as the recess which has been cast into the backing plates. The honeycomb pieces are then brazed into the recesses. Sometimes the honeycomb is filled with abrasive materials to lengthen the life.

There are several problems with honeycomb seals. Since the brazing is at the bottom of the recess it is hidden and cannot be inspected readily. Occasionally a void in the braze occurs. These seals can then tear off and jump into vulnerable knife edge seals which have been prepared to interface with the honeycomb. In this way the seal fails.

Secondly, the knife edge seals and the honeycombs are subjected to the corrosive atmosphere of the combustion gases in the engine. Particularly, the very thin honeycomb structures can be affected by sulfur in the fuel, suffering sulfidation. If they become embrittled, they may fracture and exit the engine, leaving the seal less effective at controlling gas pressures than before. For these reasons, there is a need for a more robust manufacturing method and a more corrosion resistance seal and seal material.

It is therefore the task of the invention to overcome this problem.
The problem is solved by a honeycomb cell seal according to claims 1, 2 and a method to produce it by claim 12.

In the dependent claims further advantageous embodiments of the invention are shown which can be combined arbitrarily with each other in order to get further advantages.

### It shows:

- Figure 1: honeycomb cells,
- Figure 2: schematically a way to produce a honeycomb seal,
- Figure 3: a tool to produce on honeycomb seal,
- Figure 4, 5: examples of honeycomb seals,
- Figure 6,7,8,9,10,11: some embodiments of a honeycomb seal with a coating,
- Figure 12: gas turbine
- Figure 13: a blade in a perspective view and

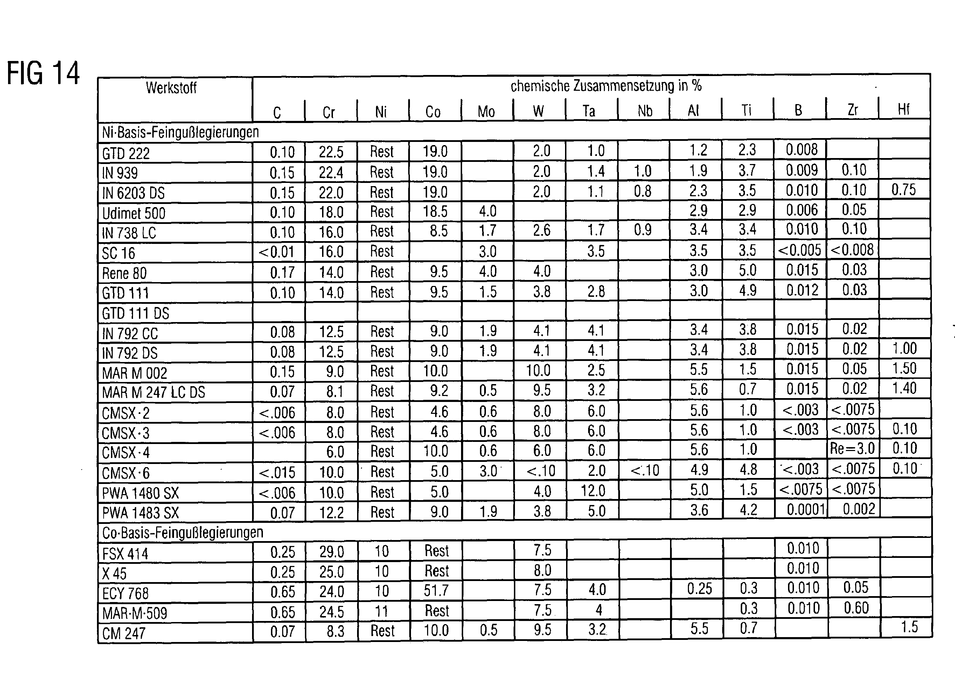

- Figure 14: a list of superalloys.

The figures and the description are only embodiments of the invention.

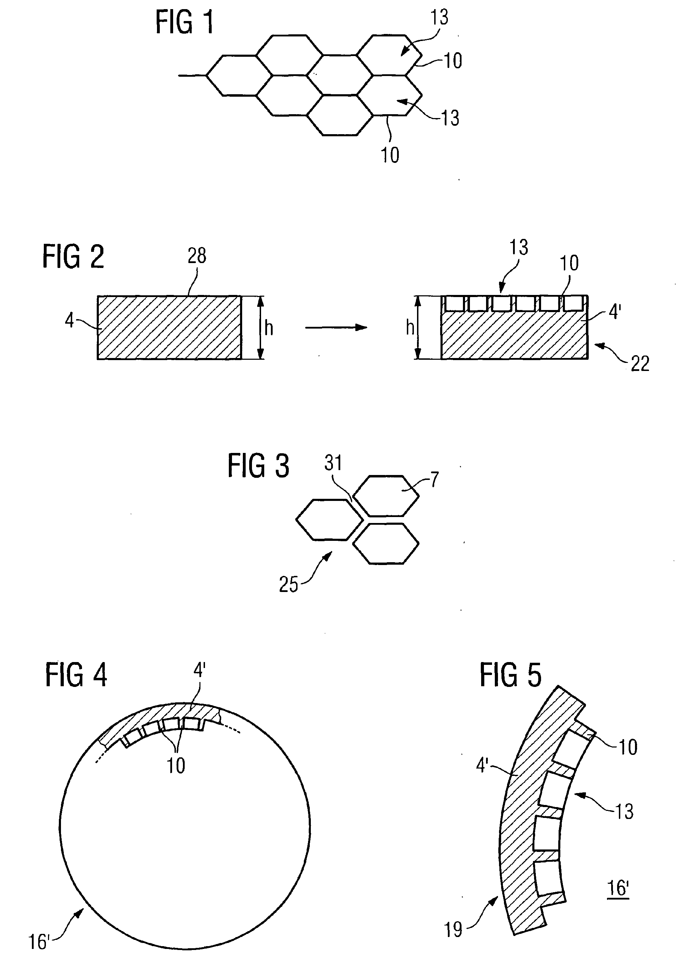

Figure 1 shows several honeycomb cells 13 which have the geometry of a honeycomb (hexagonal).
One honeycomb cell 13 consists preferably of six side walls 10. Two honeycomb cells 13 of a honeycomb seal have preferably a common side wall 10.

Figure 2 shows schematically one inventive way to produce the honeycomb seal 1.

In one aspect of this invention, a substrate 4, especially a casting 4 is made which has the identical outside dimensions as a casting in the state of the art, except that there is no recess to be filled with a fragile honeycomb material.
In this case, the hexagonal shaped honeycomb cells are formed preferably by EDM machining, very preferably by repeated EDM machining, in the manner one accustomed to this technique would do. Because the seal and the casting are now monolithic, there are no opportunities for a braze process or any other connecting technology to fail. The seal overall is stronger.

A substrate 4 which is preferably a steel or stainless steel has a thickness h.
By machining this substrate 4, preferably by EDM, the honeycomb cells 13 are produced by removing material from the outer surface 28 of the substrate 4. Therefore the honeycomb cells 13 are in one part with the substrate 4', which can be derived from the fact that the total height h of the honeycomb cells 13 together with the remaining height of the substrate 4' with the honeycomb cells 13 has still the same thickness h.
The honeycomb cells 13 are not brazed on the substrate 4'.

In Figure 3 a complementary arrangement of honeycomb cells 13 is schematically shown which is preferably used as machining tool 25.
Such a tool 25 shows preferably several stamps 7 which have the same form as a pocket of one honeycomb cell 13 (hexagonal shape) with a certain gap 31 between the stamps 7, which corresponds to the thickness of the side walls 10 of the honeycomb cell 13. Because the honeycomb seal 22 has a curved form, e. g. a ring, the tool 25 is preferably also curved (not shown).

Also only one stamp 7 can be used for EDM machining the seal.

The honeycomb seal 16 can be produced on a ring 16 (Fig. 4) or on ring segments 19 (Fig. 5), which form together a ring 16' which will be a similar ring as it is shown in Figure 4. Both will be a part of a housing cooperating with moving parts like blades 120.
The segment 19 shows several honeycomb cells 13.

In addition following the EDM operation it is preferred to etch the total overall piece (substrate 4') in an acid mixture to remove the EDM recast layer that is formed by the EDM operation. There are several mixtures of acids for performing this operation. The acid mixture used is a function of the materials that the casting has been made. These techniques are well known by those who perform this art. One difference here is that preferably the principles of the direct DC coupling of the piece which has been cast will be utilizing. Principles of EDM machinery of a piece of graphite according to the principles in US Patent 6,294,072 B1 dated September 25, 2001 are applying.
It is preferably to perform the etching to remove as much recast as possible.

Other tools for machining the honeycomb cells 13 into the substrate 4 like laser, electron beams are also possible.

Following the etching, the substrate 4' is preferably submitted to coating, especially a sequential CVD coating via vapor phase to convert the casting alloy from whatever its chemical constituents are preferably to a FeCrAlY. To perform this operation, it is preferably to shield the rear portions of the substrate from the CVD gases.

The first CVD operation will preferably be to apply a large weight fraction of iron (Fe) to the hexagonal machined pockets, if the substrate is not iron-based, especially if it is Ni-based. Following this operation, then a vapor phase (CrAlY or Cr, Al, Y or Cr+Y, Al or Al+Y, Cr, ...) coating will be applied. This coating will preferably not utilize masking materials, because it is the desire to fully coat the piece all over.

It was recognized that iron is a better getter or CrAlY is a better getter than Nickel based superalloys. This coating operation is preferably followed by a heat treatment for the purpose of ductilization and reformation of the basic and inherent γγ' phases within the nickel based superalloy.

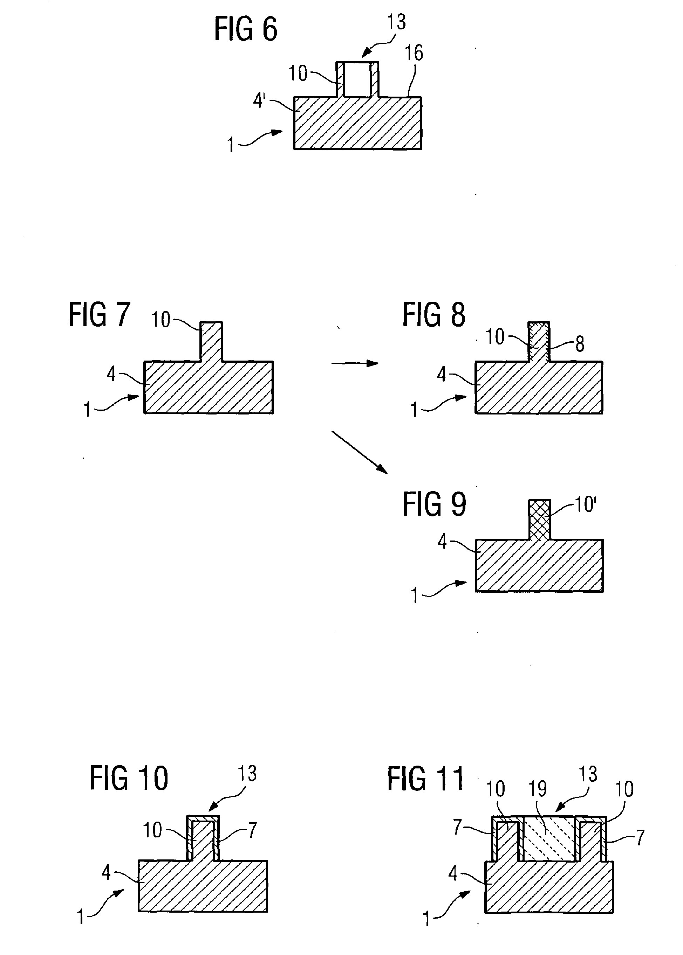

In Figure 6 a partial cross section of a substrate 4' with one honeycomb cell 13 is shown, which form a honeycomb seal
1.
   According to the invention the sidewalls 10 comprise preferably a Fe-base metallic material, especially steel or stainless steel or a nickel based superalloy.
   This steel (as an exemplary example) is then exposed to alloying elements Cr, Al and Y (Fig. 7) to form by diffusion a FeCrAlY, here a FeCrAlY diffusion area 8 inside the side wall 10 (Fig. 7 → Fig. 8). The diffusion area 8 is only a part of the side wall 10.
   The diffusion can preferably also be throughout the wall 10 (Fig. 7 → Fig. 9). This means that nothing of the original composition of the side wall 10 is left. The sidewall 10' especially consists of a FeCrAlY alloy.

Preferably first chromium can be deposition followed by deposition of aluminum, especially doped with Yttrium (Y).

Aluminizing can be performed preferably by the well known pack cementation process or other methods.
Preferably Yttrium is coated together with aluminum. Preferably other alloying elements like Hafnium, titanium or silicon can be added.

The alloying elements are preferably exposed to the substrate by a vapour process, preferably by CVD.
During exposure the elements can be used together or one by one.

Since iron is recognized as a getter for aluminum at least, then the addition of a thick aluminide coating or a thick chromide coating followed by an aluminide coating could be tailored to provide the correct chemistry to meet the composition of FeCrAlY inside the diffusion area (8).
After a following heat treatment for diffusion, a relative soft and ductile steel of a honeycomb seal was converted into a relatively brittle FeCrAlY via CVD.

The amount of Cr, Al and Y to be diffused into the substrate depends on the amount of Cr, Al (other base elements) already present in the substrate, especially the steel or Fe-based material. This can be controlled by exposure time, temperature and concentration.

### Examples

A:
   1. providing a substrate 4 with honeycomb cells 13
   2. aluminizing
   3. optionally a heat treatment to promote diffusion of Al into substrate
   4. chromizing
   5. optionally a heat treatment to promote diffusion of Cr in Al and into substrate
B:
   1. providing a substrate 4 with honeycomb cells 13
   2. aluminizing
   3. chromizing
   4. a heat treatment to promote diffusion of Cr, Al
C:
   1. providing a substrate 4 with honeycomb cells 13 and with a braze between honeycomb 13 cells and substrate 4
   2. chromizing
   3. aluminizing
   4. optionally a heat treatment to promote diffusion of Cr, Al
D:
   1. providing a substrate 4 with honeycomb cells 13 and with a braze between honeycomb 13 cells and substrate 4
   2. aluminizing
   3. chromizing
   4. optionally a heat treatment to promote diffusion of Cr, Al
E:
   1. providing a substrate 4 with honeycomb cells 13
   2. chromizing
   3. aluminizing
   4. a heat treatment to promote diffusion of Cr, Al
F:
   1. providing a substrate 4 with honeycomb cells 13
   2. chromizing
   3. optionally a heat treatment to promote diffusion of Al in substrate
   4. aluminizing
   5. optionally a heat treatment to promote diffusion of Cr in Al and into substrate

By this sequence the advantage of a ductile and easily to be manufactured steel can be used to form the honeycomb cells and adapt it into shrouds. After that a reduced ductility is not a problem anymore because no further bending or mechanical stresses due to manufacturing are induced.

According to another example of the invention a protective FeCrAlY coating 7 is applied on the iron board sidewalls 10 (Fig. 10) as an overlay coating.
Both types of overlay and diffusion coating are also possible.

The composition of the coating 7 or diffusion area 8 comprises chromium, aluminum (Al) and yttrium (Y) and balance M, especially iron (Fe). Especially the FeCrAlY alloy or coating 7 consists of Fe, Cr, Al and Y.
Optionally the MCrAlY alloy or coating 7, 8 can contain titanium (Ti), Hafnium (Hf), and/or silicon (Si) which enhance the corrosion/oxidation behavior of the alloyed or coated steel. Hafnium (Hf) stabilizes the aluminum oxide which is formed on the outside surface of the MCrAlY alloy wherein silicon (Si) will permit the formation of an aluminum silicate phase.

The phrase "contain" means that the amount of such an element is at least two times higher that the impurity level of this element in a MCrAlY alloy or at least two times higher than the measuring accuracy depending on which is higher. Especially the MCrAlY alloy or coating 7 consists of Fe, Cr, Al, Y and at least one element of the group Ti, Hf and/or Si.

Preferred ranges of the elements (in wt%) are 18% to 35% Cr, 3% to 15% Al, 0,2% to 2% Yttrium and for the optional additions up to 3% titanium, up to 3% hafnium and/or up to 3% silicon.
Adding the low side, the balance would be iron 80% by weight, and on the high side 39% by weight.

All combinations with the optional elements are preferred embodiments:
That means: MCrAlY, especially M = Fe:
+ Ti
+ Hf
+ Si
+ Ti + Hf
+ Ti + Si
+ Hf + Si
+ Ti + Hf + Si.

These seven combinations of the elements of the alloy can be on exclusive (consist) or non-exclusive (comprise) listing of the MCrAlY or coating 7.

The FeCrAlY coating 7 or diffusion area 8 preferably does not contain nickel (Ni) and/or does not contain cobalt (Co).

The MCrAlY coating 7 can be applied by a coating or exposure process known in the state of the art by using the adequate alloy of MCrAlY or preferably by coating the elements Cr, Al and Y and/or the optional elements separately and forming by diffusion this MCrAlY diffusion area.
Especially, a CVD coating process is used to coat the honeycomb cells 13 of the honeycomb seals 1.

Especially, the honeycomb cell 13 can be filled with an abradable material, especially a ceramic 19 in order to have a further improvement of the abrasion behavior of the honeycomb seal 1 (Fig. 11).

The material of the side walls 10 of the honeycomb cells 1 is preferably steel or stainless steel.

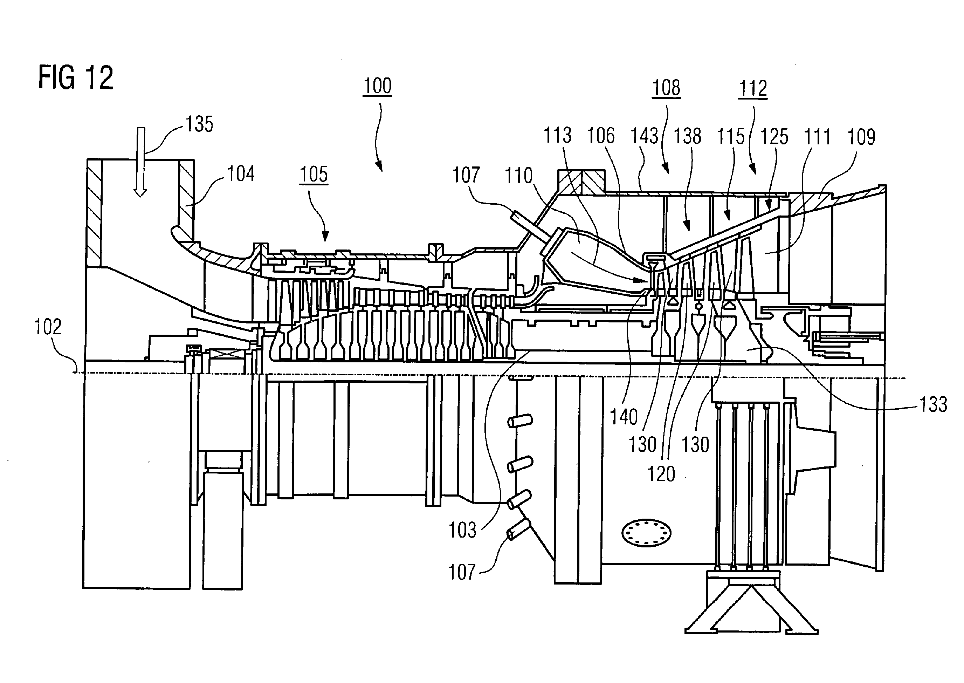

Figure 12 shows, by way of example, a partial longitudinal section through a gas turbine 100.
In the interior, the gas turbine 100 has a rotor 103 which is mounted such that it can rotate about an axis of rotation 102, has a shaft 101 and is also referred to as the turbine rotor. An intake housing 104, a compressor 105, a, for example, toroidal combustion chamber 110, in particular an annular combustion chamber, with a plurality of coaxially arranged burners 107, a turbine 108 and the exhaust-gas housing 109 follow one another along the rotor 103.
The annular combustion chamber 110 is in communication with a, for example, annular hot-gas passage 111, where, by way of example, four successive turbine stages 112 form the turbine 108.
Each turbine stage 112 is formed, for example, from two blade or vane rings. As seen in the direction of flow of a working medium 113, in the hot-gas passage 111 a row of guide vanes 115 is followed by a row 125 formed from rotor blades 120.

The guide vanes 130 are secured to an inner housing 138 of a stator 143, whereas the rotor blades 120 of a row 125 are fitted to the rotor 103 for example by means of a turbine disk 133.
A generator (not shown) is coupled to the rotor 103.

While the gas turbine 100 is operating, the compressor 105 sucks in air 135 through the intake housing 104 and compresses it. The compressed air provided at the turbine-side end of the compressor 105 is passed to the burners 107, where it is mixed with a fuel. The mix is then burnt in the combustion chamber 110, forming the working medium 113. From there, the working medium 113 flows along the hot-gas passage 111 past the guide vanes 130 and the rotor blades 120. The working medium 113 is expanded at the rotor blades 120, transferring its momentum, so that the rotor blades 120 drive the rotor 103 and the latter in turn drives the generator coupled to it.

While the gas turbine 100 is operating, the components which are exposed to the hot working medium 113 are subject to thermal stresses. The guide vanes 130 and rotor blades 120 of the first turbine stage 112, as seen in the direction of flow of the working medium 113, together with the heat shield bricks which line the annular combustion chamber 110, are subject to the highest thermal stresses.

To be able to withstand the temperatures which prevail there, they can be cooled by means of a coolant.
Substrates of the components may likewise have a directional structure, i.e. they are in single-crystal form (SX structure) or have only longitudinally oriented grains (DS structure).

By way of example, iron-based, nickel-based or cobalt-based superalloys are used as material for the components, in particular for the turbine blade or vane 120, 130 and components of the combustion chamber 110. Superalloys of this type are known, for example, from EP 1 204 776 B1, EP 1 306 454, EP 1 319 729 Al, WO 99/67435 or WO 00/44949; these documents form part of the disclosure with regard to the chemical composition of the alloys.

The guide vane 130 has a guide vane root (not shown here) facing the inner housing 138 of the turbine 108 and a guide vane head at the opposite end from the guide vane root. The guide vane head faces the rotor 103 and is fixed to a securing ring 140 of the stator 143.

The Substrate 4 is a ring or segment of a ring in which the honeycomb cell structure is machined in.
This removes the need of braise a honeycomb to a substrate and reduces the number of joints in this circumference and therefore producing the leakage paths.

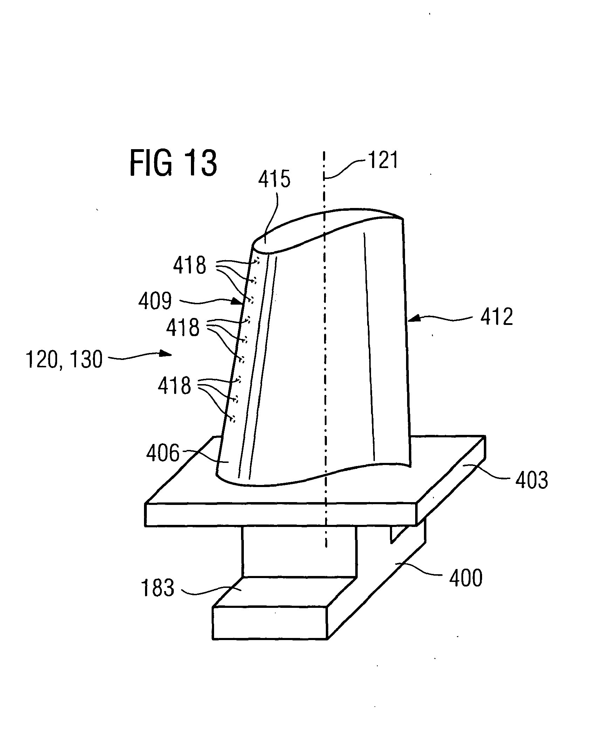

Figure 13 shows a perspective view of a rotor blade 120 or guide vane 130 of a turbo machine, which extends along a longitudinal axis 121.

The turbo machine may be a gas turbine of an aircraft or of a power plant for generating electricity, a steam turbine or a compressor.

The blade or vane 120, 130 has, in succession along the longitudinal axis 121, a securing region 400, an adjoining blade or vane platform 403 and a main blade or vane part 406 as well as a blade or vane tip 415.
As a guide vane 130, the vane 130 may have a further platform (not shown) at its vane tip 415.

A blade or vane root 183, which is used to secure the rotor blades 120, 130 to a shaft or disk (not shown) is formed in the securing region 400.
The blade or vane root 183 is designed, for example, in hammerhead form. Other configurations, such as a fir-tree or dovetail root, are possible.
The blade or vane 120, 130 has a leading edge 409 and a trailing edge 412 for a medium which flows past the main blade or vane part 406.

In the case of conventional blades or vanes 120, 130, by way of example solid metallic materials, in particular superalloys, are used in all regions 400, 403, 406 of the blade or vane 120, 130.

Superalloys of this type are known, for example, from EP 1 204 776 B1, EP 1 306 454, EP 1 319 729 A1, WO 99/67435 or WO 00/44949; these documents form part of the disclosure with regard to the chemical composition of the alloy. The blade or vane 120, 130 may in this case be produced by a casting process, also by means of directional solidification, by a forging process, by a milling process or combinations thereof.

Work pieces with a single-crystal structure or structures are used as components for machines which, in operation, are exposed to high mechanical, thermal and/or chemical stresses. Single-crystal work pieces of this type are produced, for example, by directional solidification from the melt. This involves casting processes in which the liquid metallic alloy solidifies to form the single-crystal structure, i.e. the single-crystal work piece, or solidifies directionally.

In this case, dendritic crystals are oriented along the direction of heat flow and form either a columnar crystalline grain structure (i.e. grains which run over the entire length of the work piece and are referred to here, in accordance with the language customarily used, as directionally solidified) or a single-crystal structure, i.e. the entire work piece consists of one single crystal. In these processes, a transition to globular (polycrystalline) solidification needs to be avoided, since non-directional growth inevitably forms transverse and longitudinal grain boundaries, which negate the favorable properties of the directionally solidified or single-crystal component.
Where the text refers in general terms to directionally solidified microstructures, this is to be understood as meaning both single crystals, which do not have any grain boundaries or at most have small-angle grain boundaries, and columnar crystal structures, which do have grain boundaries running in the longitudinal direction but do not have any transverse grain boundaries. This second form of crystalline structures is also described as directionally solidified microstructures (directionally solidified structures). Processes of this type are known from US 6,024,792 and EP 0 892 090 A1; these documents form part of the disclosure with regard to the solidification process.

The blades or vanes 120, 130 may likewise have coatings protecting against corrosion or oxidation, e.g. MCrAlX (M is at least one element selected from the group consisting of iron (Fe), cobalt (Co), nickel (Ni), X is an active element and represents yttrium (Y) and/or silicon and/or at least one rare earth element, or hafnium (Hf)). Alloys of this type are known from EP 0 486 489 B1, EP 0 786 017 B1, EP 0 412 397 B1 or EP 1 306 454 A1, which are intended to form part of the present disclosure with regard to the chemical composition of the alloy.
The density is preferably 95% of the theoretical density.

A protective aluminum oxide layer (TGO = thermally grown oxide layer) forms on the MCrAlX layer (as an intermediate layer or an outermost layer).

It is also possible for a thermal barrier coating, consisting for example of ZrO₂, Y₂O₃-ZrO₂, i.e. unstabilized, partially stabilized or fully stabilized by yttrium oxide and/or calcium oxide and/or magnesium oxide, which is preferably the outermost layer, to be present on the MCrAlX.
The thermal barrier coating covers the entire MCrAlX layer. Columnar grains are produced in the thermal barrier coating by means of suitable coating processes, such as for example electron beam physical vapor deposition (EB-PVD).
Other coating processes are conceivable, for example atmospheric plasma spraying (APS), LPPS, VPS or CVD. The thermal barrier coating may include porous grains which have microcracks or macrocracks for improving its resistance to thermal shocks. The thermal barrier coating is therefore preferably more porous than the MCrAlX layer.

The blade or vane 120, 130 may be hollow or solid in form. If the blade or vane 120, 130 is to be cooled, it is hollow and may also have film-cooling holes 418 (indicated by dashed lines).

## Claims

1. Honeycomb seal (22),
which comprises a substrate (4') and honeycomb cells (13),
wherein the substrate (4') is in one part with the honeycomb cells (13).

2. Seal for separating a rotating part from a stator part of a jet engine or gas turbine engine (100),
wherein an honeycomb feature (13) and
a backing plate (4'),
especially a cast backing plate,
are one monolithic piece,
especially the honeycomb feature (13) having been formed out of a substrate (4)
especially utilizing EDM machining.

3. Seal (22) according to claim 1 or 2,
which comprises a substrate (4') which is in the form of a ring (16).

4. Seal (22) according to claim 1, 2 or 3,
which comprises several segments (19) which form a ring (16').

5. Seal according to claim 1, 2, 3 or 4,
wherein the substrate (4, 4') comprises a nickel based superalloy,
especially consists of a nickel based superalloy.

6. Seal according to claim 1, 2, 3 or 4,
wherein the substrate (4, 4') is a steel or stainless steel,
especially consists of steel or a stainless steel.

7. Seal according to claim 1, 2, 3, 4, 5 or 6,
wherein the surface of the honeycomb cells (13) comprises a protective layer,
especially MCrAlY (M = Fe, Cr, Ni) alloy.

8. Seal according to claim 7,
wherein the MCrAlY alloy comprises Fe,
especially M is mainly Fe,
very especially M is only Fe.

9. Seal according to claim 7 or 8,
wherein the protective coating or the MCrAlY coating is present as an overlay coating.

10. Seal according to claim 6, 7, 8 or 9,
wherein the protective coating or the MCrAlY coating is present as diffusion coating.

11. Seal according to claim 1, 2, 3 or 4,
wherein the honeycomb seal (13) are not joined or not bonded to the substrate (4, 4') or the backing plate (4'), especially not brazed or not welded.

12. Method to produce a seal (22),
especially according to one of the claims 1 to 11,
wherein a substrate (4) is machined,
especially by an EDM-process,
so that the honeycomb cells (13) are in one part with the substrate (4').

13. Method according to claim 12,
wherein a tool (25) with a complementary arrangement image of one or more honeycomb cells (13) is used to machine a substrate (4)
so that several the hexagonal cells (13) is formed into the substrate (4) and
so that the honeycomb cell (13) or honeycomb cells (13)are in one part with the substrate (4').

14. Method according to claim 12 or 13,
wherein the substrate (4, 4') comprises a nickel based superalloy.

15. Method according to claim 12,
wherein the substrate (4) is a steel or stainless steel.

16. Method according to claim 12, 13, 14 or 15,
wherein the honeycomb cells (13) are coated with a protective layer,
especially a MCrAlY alloy.

17. Method according to claim 12, 13, 14, 15 or 16,
wherein the substrate (4') is coated with Fe, Cr, Al and/or Y,
especially by vapour deposition.

18. Method according to claim 12, 13, 14, 15, 16 or 17,
wherein the substrate (4') is diffused at least with chromium (Cr), aluminum (Al) and
optionally with iron (Fe) and/or yttrium (Y).
